(19) **Europäisches Patentamt**

**European Patent Office**

**Office européen des brevets**

(11) **EP 1 379 021 B1**

(12) **EUROPEAN PATENT SPECIFICATION**

(45) Date of publication and mention
of the grant of the patent:
**06.09.2006 Bulletin 2006/36**

(51) Int Cl.:
*H04L 7/04* *(2006.01)*    *H04L 7/08* *(2006.01)*
*H04Q 7/38* *(2006.01)*    *H04B 7/26* *(2006.01)*
*H04L 7/00* *(2006.01)*

(21) Application number: **03020277.4**

(22) Date of filing: **20.07.1995**

(54) **Wireless telephone**

Drahtloses Telefon

Téléphone sans fil

(84) Designated Contracting States:
**DE FR GB SE**

(30) Priority: **25.11.1994 JP 29121094**

(43) Date of publication of application:
**07.01.2004 Bulletin 2004/02**

(62) Document number(s) of the earlier application(s) in
accordance with Art. 76 EPC:
**95111446.1 / 0 693 835**

(73) Proprietors:
• **SANYO ELECTRIC CO., LTD.**
**Moriguchi-shi, Osaka-fu (JP)**
• **Tottori Sanyo Electric Co., Ltd.**
**Tottori-shi, Tottori-ken (JP)**

(72) Inventors:
• **Yamane, Manabu**
**Tottori-shi**
**Tottori-ken (JP)**

• **Tanaka, Junji**
**Tottori-shi**
**Tottori-ken (JP)**
• **Taniguchi, Hideko**
**Tottori-shi**
**Tottori-ken (JP)**
• **Morimoto, Mitsuru**
**Tottori-shi**
**Tottori-ken (JP)**

(74) Representative: **Glawe, Delfs, Moll**
**Patentanwälte**
**Postfach 26 01 62**
**80058 München (DE)**

(56) References cited:
**EP-A- 0 448 015**

**Description**

BACKGROUND OF THE INVENTION

The present invention relates to a wireless telephone, also called a mobile station, used as a portable telephone or a mobile telephone in a digital wireless communication system.

In recent years, wireless telephones of a time division multiplex access (TDMA) system have been put to practical use. An example of such wireless telephone is disclosed in Japanese Patent Kokai Publication No. 104861/1994.

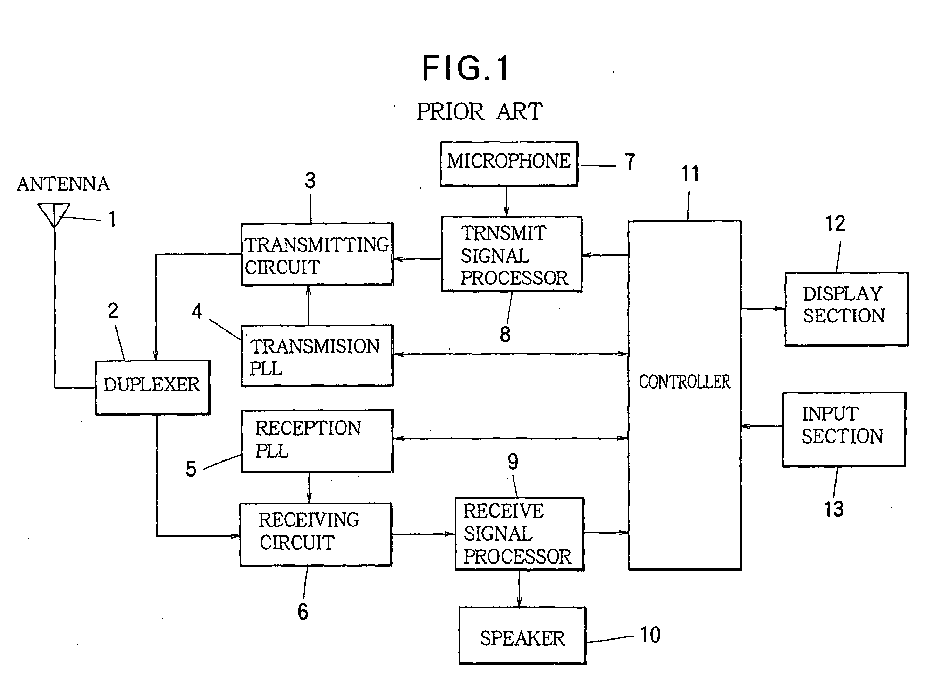

FIG. 1 shows the basic configuration of a digital wireless telephone of the TDMA system. In FIG. 1, a radiofrequency signal transmitted from a base station, not shown, is received by an antenna 1, and supplied via a duplexer 2 to a receiving circuit 6.

The receiving circuit 6 converts the received RF signal into a digital baseband signal, and supplies it to a receive signal processor 9. The receive signal processor 9 detects, from the baseband signal, a sync signal of a slot allocated to the wireless telephone, as will be described later, extracts data signals and demodulates the data signals into audio signals, and supplies them to a speaker 10, and notifies a controller 11 of an end of the allocated slot. The speaker 10 converts the audio signal into speech.

The audio signals having been obtained by converting speech by means of a microphone 7 are converted by a transmit signal processor 8 under control of the controller 11. into a digital baseband signal, and further converted into an RF signal by a transmitting circuit 3. The RF signal supplied from the transmitting circuit 3 is supplied via the duplexer 2 to the antenna 1, and then transmitted to the base station, not shown.

The reception frequency at the receiving circuit 6 and the transmission frequency at the transmitting circuit 3 are determined by the reception phase sync loop (PLL) 5 and a transmission PLL 4 controlled by the controller 11. Details of these PLLs will be described later.

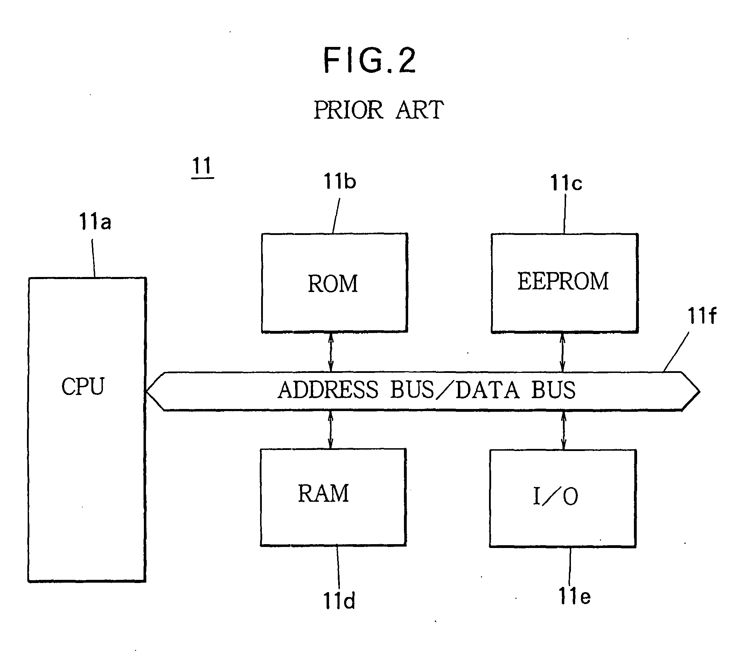

FIG. 2 is a block diagram showing the configuration of the controller 11 in FIG. 1. Referring to FIG. 2, the controller 11 comprises a CPU 11a coupled with a ROM 11b, an EEPROM 11c, a RAM 11d, and an I/O 11e via an address/data bus 11f.

A user of the telephone makes a call by inputting commands, telephone number and the like into the controller 11 by means of a key input section 13 comprising key pads. A display section 12 comprises a liquid crystal display, for example, displays the input commands, telephone number, or messages prompting user to take some action, the state of connection of the circuit of the wireless telephone, and the like.

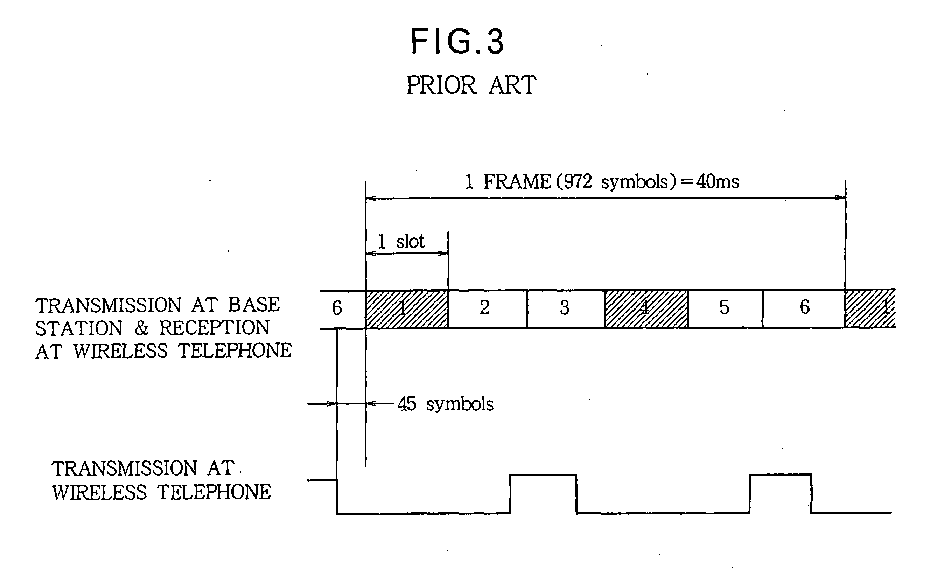

FIG. 3 is a diagram showing the timing of the TDMA operation in the mobile communication system of the TDMA system stipulated in IS-54-B standard (hereinafter referred to as IS-54) of Electronic Industries Association (EIA) and Telecommunication Industry Association (TIA) in the United States.

Referring to FIG. 3, the base station continuously transmits signals having been divided into slots, and the portable telephone can continuously receive the signal transmitted from the base station, while the wireless telephone transmits the signals in series of bursts at predetermined timings. The timings of transmission of the signals from the wireless telephone are stipulated to be in synchronism with the timing detected from the signal transmitted from the base station and received at the wireless telephone.

As will be apparent from FIG. 3, one frame of transmission and reception of signals between the base station and wireless telephone is formed of 972 symbols, and 40 msec. long.

One frame of the transmission and reception is divided into six slots 1 to 6. The symbol rate is 24.3 kSymbols/sec per channel. When the voice codec is of a full rate, two slots in one frame are allocated to communication between the base station and one wireless telephone. That is, one base station can communicates, in each channel, with three wireless telephones per channel in parallel.

The allocation of the slots within each frame may be such that a combination of the slots 1 and 4, a combination of the slots 2 and 5, and a combination of the slots 3 and 6 may be allocated for the respective wireless telephones. In the following explanation, it is assumed that the slots 1 and 4, indicated by hatching in FIG. 3, are allocated to the communication between the base station and the wireless telephone in question. It is stipulated that the wireless telephone ends the transmission of the signals 45 symbols (about 1.85 msec.) before the commencement of the allocated slot.

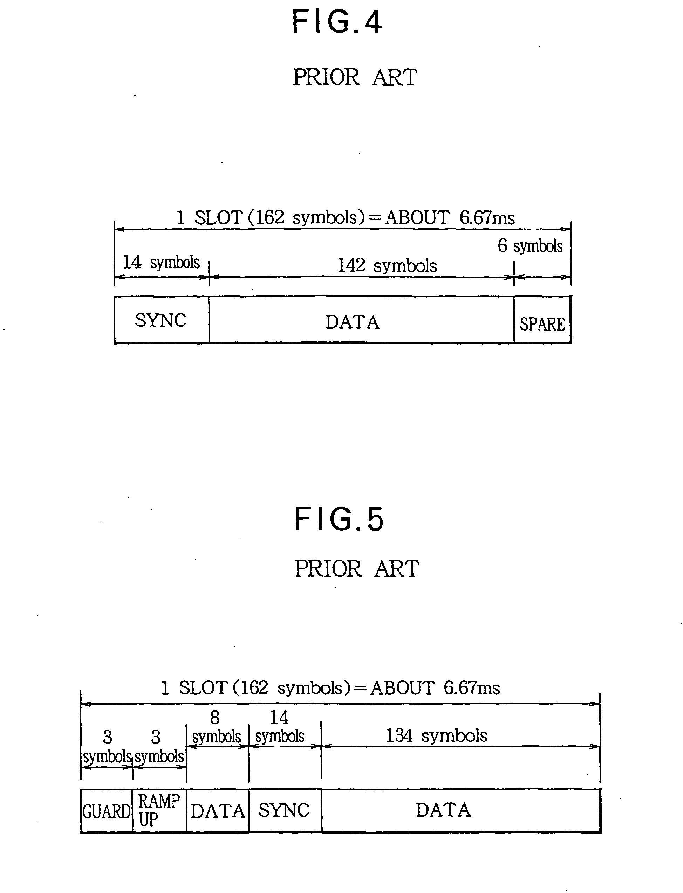

FIG. 4 shows the configuration of one slot of a transmit signal from the base station, i.e., a receive signal at the wireless telephone. It comprises a sync signal of 14 symbols, data signals and the like of 142 symbols, and spare part of six symbols. FIG. 5 shows the configuration of one slot of a transmit signal at the wireless telephone. It comprises a guard of three symbols, a ramp-up of three symbols, a sync signal of 14 symbols, and data signals and the like of 134 symbols.

When the processing is made by means of a software using a microprocessor in the conventional wireless telephone, the sync signal for the allocated slot, contained in the receive signal received immediately before is detected, and the transmission timing is generated from the timing at which the sync signal is detected, and the transmit signal is transmitted at the transmission timing. When the sync signal of the receive signal is not detected, the transmission of the transmit signal is stopped.

However, even if there is an instance when the receive signal is not detected for some reason, the transmit signal may be properly received at the base station. This is because the environment, such as fading may be different between the time of transmission and time of reception. The propagation path may also be different between the transmission and the reception. Accordingly, if the transmission is stopped when the sync signal is not detected, as described above, then there will be no possibility at all of the transmit signal from the wireless telephone being received at the base station, and the smooth demodulation at the base station may be prevented, and the speech may be interrupted or intermittent.

In a conventional digital mobile communication system of the TDMA system, a mobile assisted hand-off (MAHO) function by the wireless telephone, as a mobile station, has been realized. The MAHO function is generally as follows:

In digital wireless telephone of the TDMA system, during MAHO operation, the wireless telephone is made to perform measurement of the channel quality, such as electrostatic field i.e., received signal strength (RSS) or the like, of each of the currently-used channel and one or more other channels (up to 12 channels) having vacant a slot (hereinafter called a "vacant channel"), and if the channel quality of any of the vacant channels is better than that of the current channel, then hand-off from the current channel to the vacant channel for which the better channel quality has been measured is performed.

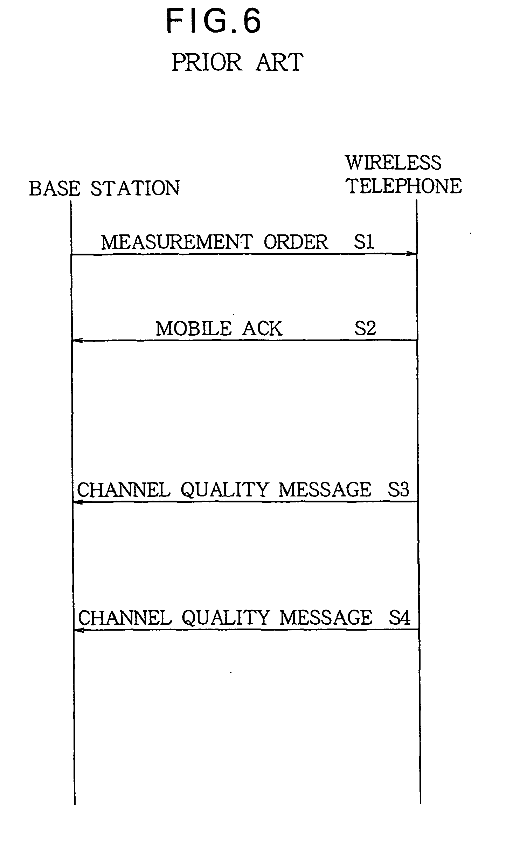

FIG. 6 shows the protocol sequence in the MAHO operation between the base station and a wireless telephone, in a digital communication system of the TDMA system.

The base station issues a Measurement Order (S1) for inspecting the channel quality (reception condition) of the current channel in terms of numerical data concerning the RSS, the bit error rate, and the like, and also to inspect the channel quality of one or more vacant channels.

When the wireless telephone receives the Measurement Order (S1), it issues Mobile Ack (S2) and transmits it to the base station, and starts the MAHO operation.

In this MAHO operation, the wireless telephone alternately measures the channel quality, such as the RSS, of a selected one of the vacant channels specified by the information in the Measurement Order (S1) and the channel quality of the current channel. The results of the measurement are transmitted as Channel Quality Message (S3) and Channel Quality Message (S4) to the base station. Hand-off to a better channel is achieved on the basis of the results of the measurements.

In the MAHO operation, the channel quality of the current channel and the vacant channel must be measured alternately. For this reason, the wireless telephone alters the reception frequency of the reception PLL 5 shown in FIG. 1 to receive a signal in a vacant channel during the MAHO operation, performs the measurement of the channel quality of the vacant channel, and then returns the reception frequency of the reception PLL 5 to performs the reception in the current channel.

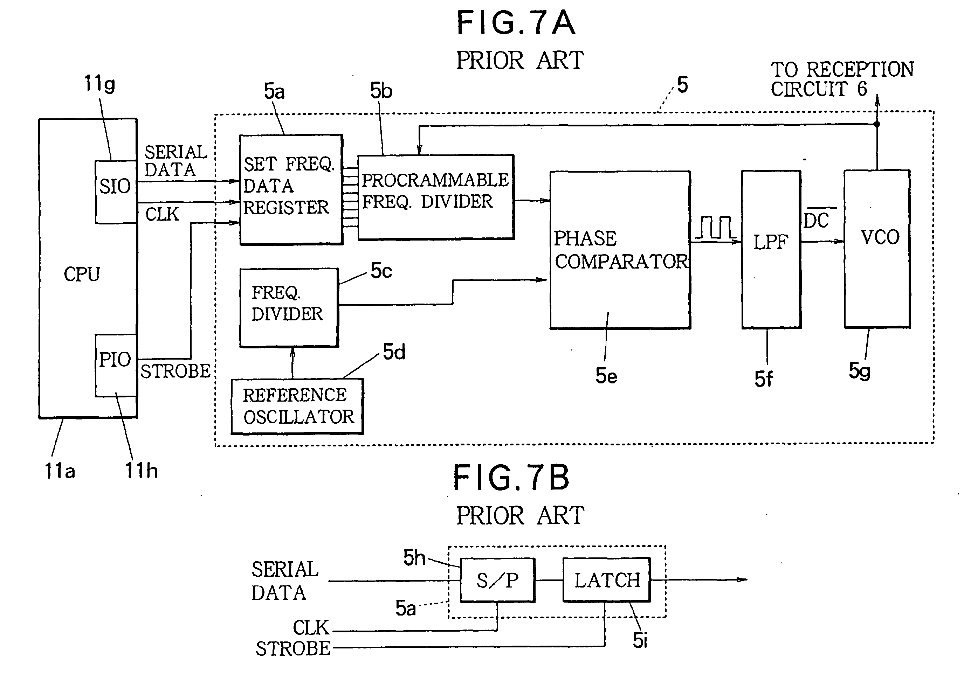

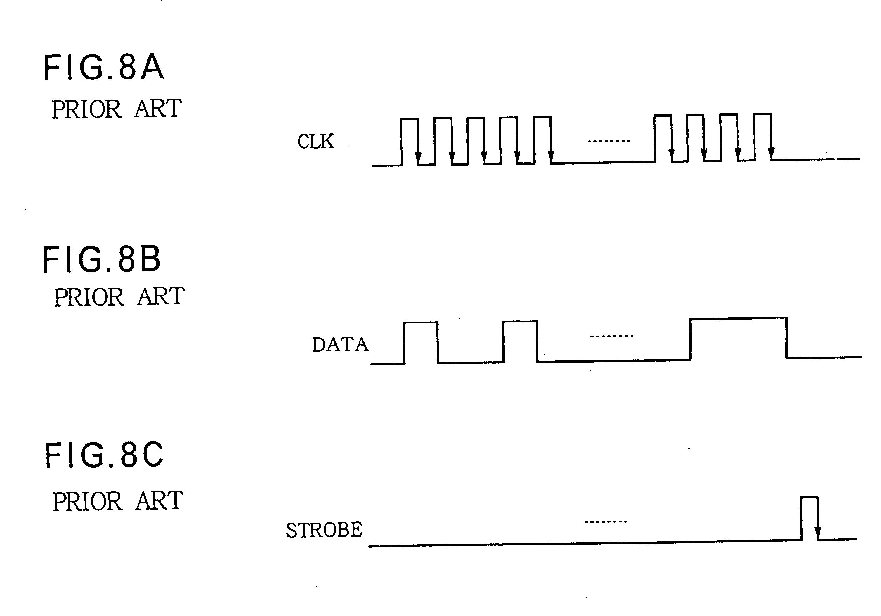

FIG. 7A is a block diagram showing the reception PLL 5, and FIG. 8A to FIG. 8C are timing charts for explaining the process of altering the reception frequency at the reception PLL. The process of altering the reception frequency at the reception PLL will next be described with reference to FIG. 7A and FIG. 8A to FIG. 8C.

First, from the serial input/output (SIO) 11g of the CPU 11a, reception PLL data (FIG. 8B) corresponding to the frequency to which the output frequency of the PLL 5 is to be altered is supplied to and written in a set frequency data register 5a in the reception PLL 5 in synchronism with a clock (FIG. 8A).

The reception PLL data is supplied serially, rather than in parallel, from the CPU 11a to the PLL 5 is to reduce the number of pins of the CPU 11a and the PLL 5.

At the timing at which the frequency is to be altered, a PLL strobe signal (FIG. 8C) which is one of bits of parallel data from a parallel input/output (PIO) 11h of the CPU 11a is supplied to the set frequency data register 5a, so as to transfer the reception PLL data (frequency division factor data) written in the data register 5a to the programmable frequency divider 5b.

The set frequency data register 5a is formed, for example as shown in FIG. 7B. That is, it comprises a serial/parallel register 5h, and a latch circuit 5i. The serial data from the CPU 11a is written, bit by bit, in the serial parallel converter 5h, which output its contents in parallel form. After all the bits are written in the serial/parallel converter 5h, and when the PLL strobe signal is applied to the latch circuit 5b (at the timing when the reception frequency is to be altered), the output from the serial/parallel converter 5h is written in the latch circuit 5i. When the output of the serial/parallel converter 5h is written in the latch circuit 5i, its output is promptly altered.

The programmable frequency divider 5b frequency-divides the output of the voltage controlled oscillator 5g, to be described later, with a frequency division factor programmed by the frequency division factor data, and supplies the frequency-divided signal to one of the inputs of a phase comparator 5e.

The frequency divider 5c frequency-divides the signal of a fixed frequency from a reference oscillator 5d, and supplies the frequency-divided signal to the other input of the phase comparator 5e.

The phase comparator 5e outputs pulses corresponding to the phase difference between the two input signals, and supplies the pulses to a low-pass filter (LPF) 5f. The LPF 5f converts the input pulses into a DC control voltage, and supplies it to the voltage-controlled oscillator 5g to control its oscillating frequency.

The oscillating frequency of the voltage controlled oscillator 5g is supplied as the output of the reception PLL 5 to the receiving circuit 6 in FIG. 1, and also is fed back to the programmable frequency divider 5b.

If the frequency division factor of the programmable frequency divider 5b is N (positive integer), the output frequency of the frequency divider 5c is fr, and the oscillating frequency of the voltage controlled oscillator 5g is fo, then the following equation holds:

$$fo = N \cdot fr$$

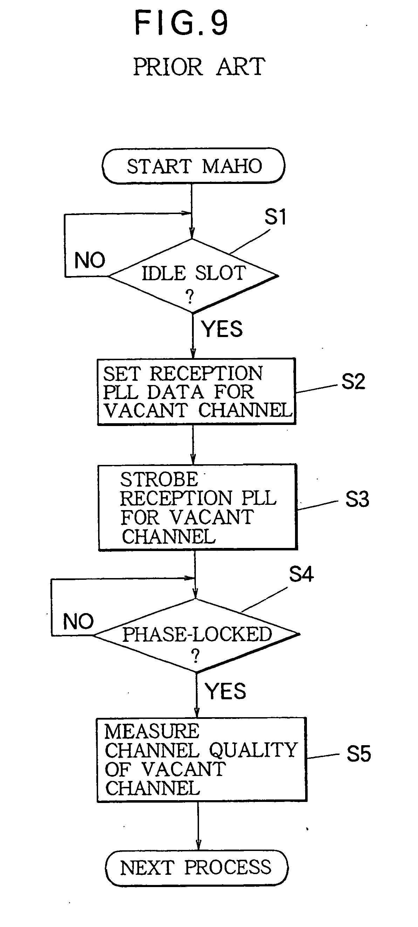

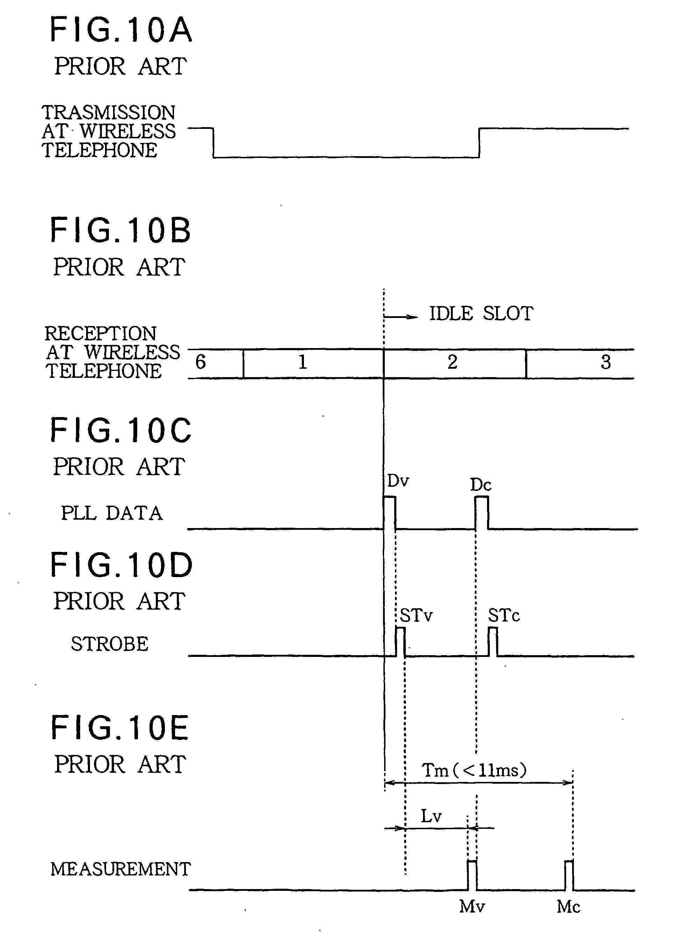

Next, FIG. 9 is a flowchart showing the MAHO operation of the CPU 11a in. the wireless telephone of the TDMA system, and FIG. 10A to FIG. 10E are its timing charts. The MAHO operation will be described in further detail referring to FIG. 9 and FIG. 10A to FIG. 10E.

When the MAHO operation is started, the CPU 11a, at step S1, first makes judgment as to whether or not it is now in an idle slot (one of the slots not used by or allocated to any of the wireless telephones).

When it is judged at step S1 that it is now in an idle slot, the serial reception PLL data Dv (FIG. 10C) for a vacant channel (or a selected one of vacant channels) for which the measurement should be made is supplied from the serial input/output 11g of the CPU 11a and set in the set frequency data register 5a in the reception PLL 5 (step S2).

When the reception PLL data has been set, and when it becomes the timing at which the frequency should be altered to that for the vacant channel, the PLL strobe signal STv (FIG. 10D) which is one of the bits of the parallel input/output 11h of the CPU 11a is supplied to the set frequency data register 5a (step S3). Then, judgment is made as to whether the reception PLL 5 has been phase locked (step S4). This in fact is done by judging whether a predetermined lock-up has elapsed after the PLL strobe signal. It is however possible to measure the phase difference, and judges that the reception PLL 5 has been phase-locked when the measured phase difference is smaller than a predetermined value.

When it is judged that the phase-lock has been attained, measurement of the channel quality of the vacant channel is conducted at timing Mv (FIG. 10E and step S5).

While the measurement for the vacant channel is effected, the serial reception PLL data Dc (FIG. 10C) for the current channel is then supplied from the serial input/output 11g of the CPU 11a and set in the set frequency data register 5a in the reception PLL 5.

When the setting of the reception PLL data is completed, and when it becomes the timing at which the frequency is returned to that for the current channel, the PLL strobe signal STc (FIG. 10D) which is one of the bits of the parallel input/output 11h of the CPU 11a is supplied to the set frequency data register 5a. Judgment is then made as to whether the reception PLL 5 has been phase-locked.

When it is judged that the phase-lock has been attained, the measurement of the channel quality of the current channel is conducted at timing Mc (FIG. 10E).

The measurement of the channel quality of the current channel is conducted in the same way, in a period other than the allocated slot.

In the wireless telephone of the TDMA system in the prior art, when the full rate codec is used, the measurement of the vacant channel and the current channel needs to be completed within 11 msec. from the setting of the reception PLL data in the data register 5a. That is, the time Tm up to the measurement of the current channel must be less than 11 msec.

That is, if the sum of the time for the setting of the PLL data for the vacant channel, the lock-up time Lv which the reception PLL 5 requires for phase lock to the vacant channel, the time for measurement for the vacant channel, the time for the setting of the PLL data for the current channel, the lock-up time which the reception PLL 5 requires for phase lock to the current channel, and the time for measurement for the current channel exceeds the above-mentioned stipulated time, then it is not possible to return to the current channel before the commencement of the current channel reception slot (e.g., the slot 4), and the reception of the current channel from the base station is no longer possible. The timing with which it is possible to return to the current channel is called MAHO timing.

EP-A-0 448 015 discloses a handover process in a mobile radio communication system. A mobile station monitors a quality of a radio line between the mobile station and a first base station and when deterioration of the quality of the radio line between the mobile station and the first base station is outside a tolerable range, communication with a second base station from which the signal with maximum field intensity is received is established.

Another problem of the conventional wireless telephone accompanies the increase in control data exchanged between the wireless telephone and the base station. In the past, not so much amount of such control data was exchanged, and the positions of the control data within bit stream data are fixed, so that the designated bits are directly analyzed, created, or processed, by programs.

However, in recent wireless telephone, data is digitized, and functions are more complicated, so that the number and types of exchanged control data are increased, and the format of control data is more complicated. To process the communication data by the use of programs as in the prior art, a ROM of a large capacity is required, and the cost is increased. The size of the wireless telephone is increased, and its portability is degraded.

SUMMARY OF THE INVENTION

An object of the invention is to enable transmission from the wireless telephone for a certain period when the sync signal in the receive signal is ceased to be detected at the wireless telephone.

Another object of the invention is to provide a digital wireless telephone of the TDMA system which can return to the current channel in time after the MAHO operation.

Another object of the invention is to provide a digital wireless telephone of the TDMA system which can perform the MAHO operation without degradation in the transmitted voice quality or interference in the data communication due to noises.

According to an aspect of the invention, there is provided a wireless telephone of a TDMA system having a MAHO function, comprising:

reception means (6) receiving a signal from a base station, said reception means (6) capable of reception in a selected one of a plurality of channels of different frequencies;

a controller (11) for causing the reception means (6) in a state of reception in a first channel, to perform tentative reception and measurement in a second channel to find whether it is desirable to change a reception channel signal from the first channel to the second channel;

a PLL (5) for determining the frequency of the signal to be received by said reception means (6);

said controller (11, S211, S213; S221, S223) normally causing said PLL to generate a first frequency corresponding to the first channel by providing said PLL with first control data, causing, during said MAHO operation, said PLL to generate a second frequency corresponding to the second channel by providing said PLL with second control data, and applying a change timing signal for causing the PLL to change from the first frequency to the second frequency; and

means (11, S216, S228) for measuring the channel quality of the said second channel;

wherein said signal transmitted from said base station is time-divided in a plurality of slots including a first slot which is currently allocated to the wireless telephone and a second slot in which the measurement of the channel quality of said second channel is to be effected, and

said controller (11) performs the operation for transferring the first control data to said PLL, prior to the commencement of the second slot, and performs said operation for changing the generated frequency during said second slot.

With the above arrangement, the time required for the MAHO measurement to be completed after the commencement of the idle slot (in which the measurement is effected) is shorter by the length of time necessary for transferring the control data. The requirements on the MAHO timing can thus be met.

It may be so arranged that said controller (11) transfers the second control data to said PLL in said first slot.

With the above arrangement, the influence of transfer of the PLL data on the reception of the signal from the base station can be eliminated.

It may be so arranged that said controller (11) transfers the second control data to said PLL during a period other than a period for transmission from the wireless telephone to the base station.

With the above arrangement, influence of transfer of the PLL data on the transmission of the signal to the base station can be eliminated.

BRIEF DESCRIPTION OF THE DRAWINGS

The above and other objects of the invention, its features and advantages will be more apparent from the description of the embodiment with reference to the drawings, in which:-

FIG. 1 is a block diagram showing the basic configuration of a conventional digital wireless telephone of the TDMA system;

FIG. 2 is a diagram showing the details of the configuration of the controller shown in FIG. 1;

FIG. 3 is a diagram showing the timing of the TDMA operation in the mobile communication system of the TDMA system;

FIG. 4 is a diagram showing the configuration of one slot of a transmit signal from the base station;

FIG. 5 is a diagram showing the configuration of one slot of a transmit signal at the wireless telephone;

FIG. 6 is a diagram showing the protocol sequence in the MAHO operation between a base station and a wireless telephone, in a digital communication system of the TDMA system;

FIG. 7A is a block diagram showing the configuration of the reception PLL;

FIG. 7B is a block diagram showing an example of the set frequency data register 5a in FIG. 7A;

FIG. 8A to FIG. 8C are timing charts showing the process of alteration of the reception frequency at the reception PLL;

FIG. 9 is a flowchart showing the MAHO operation of the digital wireless telephone of the TDMA system in the prior art;

FIG. 10A to FIG. 10E are timing charts showing the MAHO operation of the digital wireless telephone of the TDMA system in the prior art;

FIG. 11A is a block diagram showing the configuration of a conventional digital wireless telephone of the TDMA system;

FIG. 11B is a diagram showing the contents of part of the RAM in the controller 11 shown in FIG. 11A;

FIG. 12 is a diagram showing the timing of the TDMA operation in the mobile communication system of the TDMA system;

FIG. 13 is a flowchart showing the operation for the autonomous generation of the transmit timing signal according to the configuration of FIG. 11A;

FIG. 14 is a flowchart showing the MAHO operation of the digital wireless telephone of the TDMA system of an embodiment of the invention;

FIG. 15A to FIG. 15E are timing charts showing the operation of the CPU in the digital wireless telephone of the TDMA system of the embodiment of FIG. 14;

FIG. 16A and FIG. 16B are flowcharts showing the MAHO operation of the digital wireless telephone of the embodiment of FIG. 14 of another embodiment of the invention;

FIG. 17A to FIG. 17E are timing charts showing the MAHO operation of the digital wireless telephone of the embodiment of FIG. 16A and FIG. 16B;

## DETAILED DESCRIPTION OF THE PREFERRED EMBODIMENTS

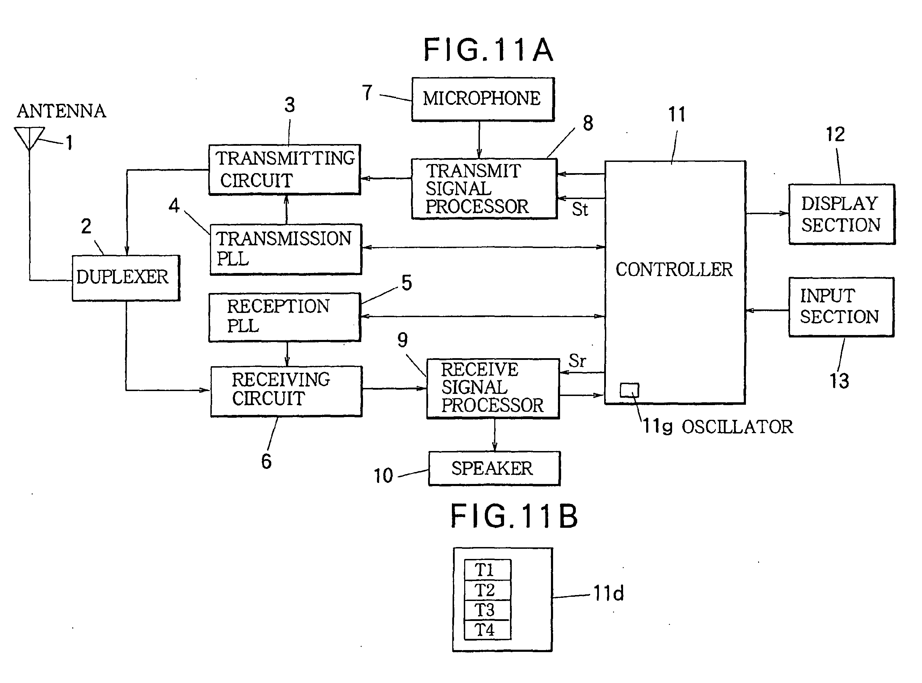

Technical background of the invention will now be described with reference to FIG. 11A, FIG. 11B, FIG. 12 and FIG. 13 as well as FIG. 1 and FIG. 2.

The hardware configuration of the wireless telephone of this example is the similar to that shown in FIG. 1. However, the controller 11 of this example has an additional function which is implemented by software, i.e., computer programs stored in a program memory 11b (FIG. 2).

As was described, the receive signal processor 9 notifies the controller 11 of the reception of a sync signal that has been detected in the receive signal.

Responsive to the sync signal in the receive signal, the controller 11 generates a transmission timing signal St indicating the timing of transmission at the next transmission cycle, and a reception timing signal Sr indicating the timing of reception of at the next reception cycle, and performs control over timing for autonomous transmission, to be later described in detail. The generation of the transmission timing signal St and reception timing signal Sr is achieved by measuring the time by reference to an internal oscillator 11g, i.e., by counting clock pulses generated from the internal oscillator 11g.

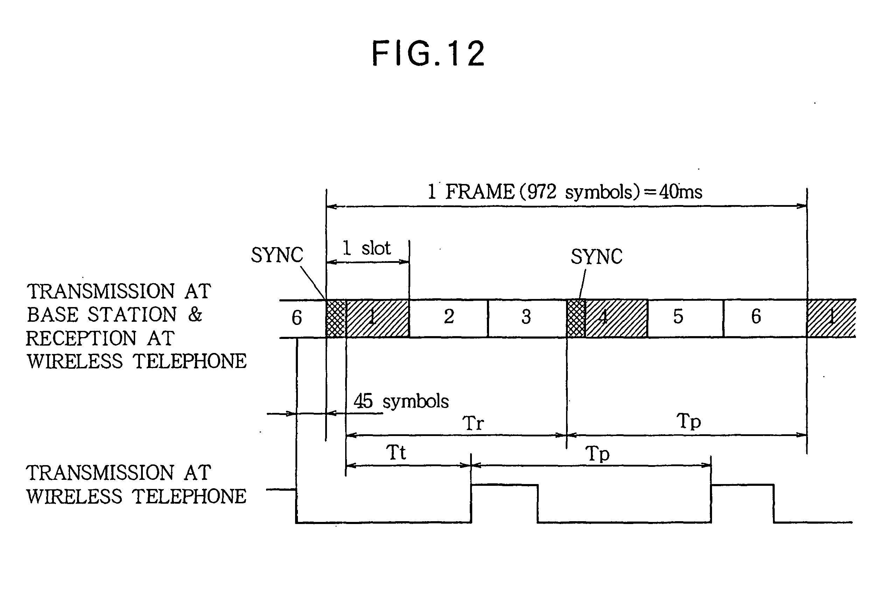

Specifically, the controller 11 generates the transmission timing signal St a predetermined time Tr (FIG. 12) after the detection of the sync signal, and generates the reception timing signal Sr a predetermined time Tr (FIG. 12) after the detection of the sync signal. When the sync signal is not detected, the controller 11 keeps generating the transmission timing signal St, with reference to the timing at which the sync signal was last detected, to continue the transmission until expiration of a predetermined time Ta.

When the sync signal is not detected, generation of the transmission timing signal St is repeated at a predetermined interval Tp, which is equal to the time length for three slots.

The overall effect is that the transmission timing signal St is generated Tt after the detection of the sync signal, and thereafter at an interval of Tp. Such continued generation of the transmission timing signal St at an interval Tp, measured on the basis of the clock internal to the wireless telephone, is called autonomous generation of the timing signal St, and is continued for a predetermined time Ta after the sync signal was last detected. When the predetermined time Ta has expired, the autonomous generation of the transmission timing signal St is stopped (and hence the transmission is halted). The reason for halting the transmission by means of the autonomous generation of the transmission timing signal is that the error in the transmission timing signal St accumulates with time, and may become intolerable, causing interference with the communication of other wireless telephones.

As an example, the length of the time Ta is 0.823 sec., as will be explained later.

The controller 11 also causes termination of communication when the sync signal is not detected for a predetermined time Tf, called fading time. This to stop communication when an adverse reception state continues. The time Tf is five sec. for example.

To perform the above operations, the RAM 11d in the controller 11 of this embodiment has memory areas used as timers T1 to T4, as shown in FIG. 11B. The timers T1 and T4 are for measuring the times Tf and Ta, respectively. The timer T2 is for measuring the time Tt or Tp. The timer T3 is for measuring the time Tr or Tp.

The CPU 11a of the controller 11 writes the set values in the respective timers, and cause the timers to down-count in accordance with the internal clock, and when the value of each timer becomes zero, a time-out signal is generated.

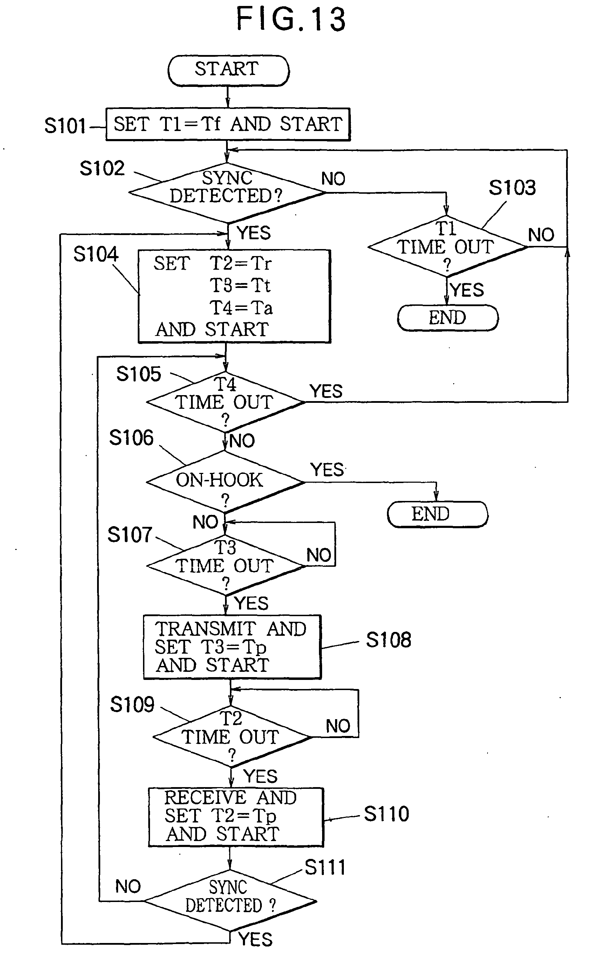

FIG. 13 shows the operation for determining the timing of the transmission and reception, in accordance with the computer program stored in the ROM 11b. This operation is started when the communication (call) is started.

First, at step S101, Tf is set in the fade timer T1, which is then started. Then, at step S102, and judgement is made as to whether a sync signal is detected in the receive signal. If it is not detected, then at step S103, whether the fade timer T1 has timed out. It it has not timed out, then the next step is step S102. If it has timed out, the communication is terminated.

If, at step S102, the sync signal is detected, then at step S104, Tf, Tr, Tt and Ta are set (or re-set), and the timers are started (or re-started).

Then, at step S105, judgement is made as to whether T4 has timed out. If it has timed out, then the next step is step S102. If it has not timed out, then the next step is step S106, where judgement is made as to whether an on-hook signal has been generated. If it has been made, the communication is terminated. If it has not been made, then CPU 11a waits for the transmission timing to come, by referring to the timer T3. When the transmission timing comes, then at step S108, transmission timing signal St is generated (causing the transmit signal processor 8 to perform the transmission), and Tp is set in the timer T3, which is then started.

At a next step S109, the CPU 11a waits for the reception timing to come. When the reception timing comes, then at step S110, reception is made, and Tp is set in the timer T2, which is then started.

At a next step S111, judgment is made as to whether the sync signal is detected in the receive signal.

If it is detected, the next step is step S104. If it is not detected, the next step is step S105.

It should be noted that if the sync signal is detected, the timers T2 and T3 are re-set with Tr and Tt (step S104), so that the next transmission and reception are made at timing Tt or Tr after the detection of the sync signal, while if the sync signal is not detected, the next transmission and reception are conducted at timing Tp after the preceding transmission or reception. When the sync signal is not detected, the voice signal processing is not performed.

However, the transmission of the signal at the step S108 may successfully reach the base station, and the one-way communication may be continued.

In this way, autonomous transmission may be continued for Ta after the last detection of the sync signal.

The length of Ta depends on the accuracy of the clock generator internal to the wireless telephone. As an example, consideration is given for a case according to the stipulation of IS-54.

The transmission burst of the wireless telephone is provided with a guard field of three symbols. The guard field is provided for avoiding interference between signals due to time shift of the timing of the transmission between different wireless telephones. With a safety margin, it can be said that an error of one symbol will not cause an interference. The time length at which the error may exceed one symbol is the maximum value of time Ta. The tolerance of the quarz oscillator generally employed is 50 ppm. The time at which the error is one symbol length if the error of the oscillator is 50 ppm can be set is Ta. Since the symbol rate is 24.3 k Symbols/sec.,

$$Ta = (1/24,300)/0.00005$$
$$= about\ 0.823\ sec.$$

As has been described according to the example described with reference to FIG. 11A to FIG. 13, the wireless telephone can continue transmission, without being affected by the quality of radio channel from the base station to the wireless telephone. The base station can receive the signal transmitted from the wireless telephone, and the demodulated voice and the like are not interrupted. In particular, the quality of transmission of data from the wireless telephone can be improved.

An embodiment of the invention will now be described. In the embodiment described below, the basic configuration and operation of the digital wireless telephone are the same as those of the prior art example described with reference to FIG. 1 to FIG. 8, and their description is not repeated. The assumption that the slots 1 and 4 are allocated to the wireless telephone in question also holds.

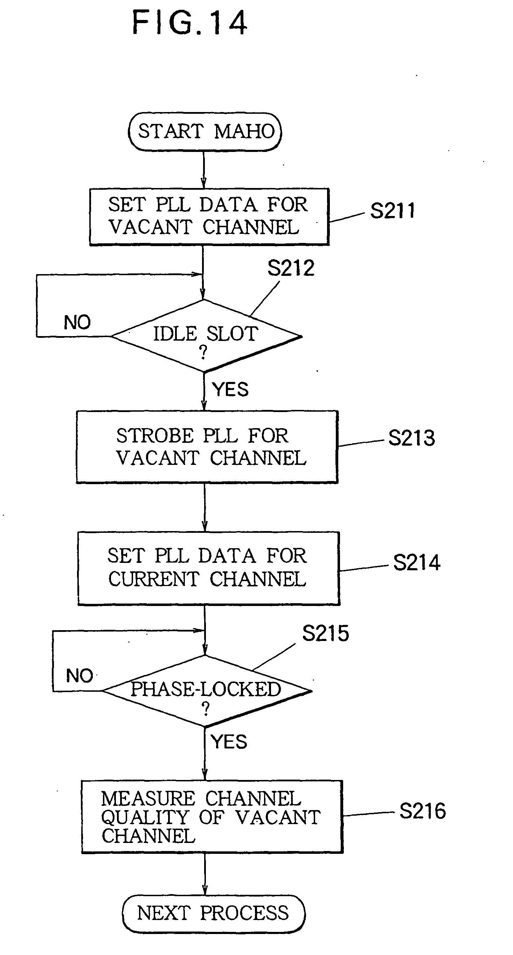

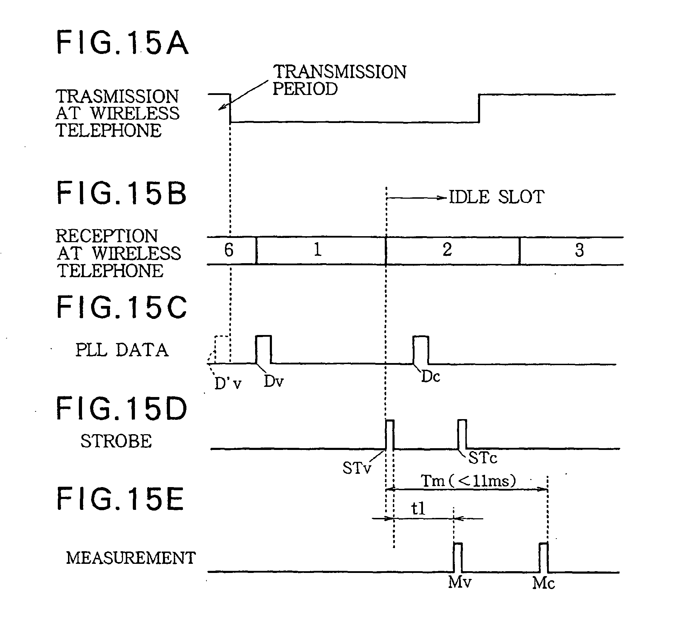

FIG. 14 is a flowchart showing the MAHO operation of the CPU 11a of the wireless telephone of the TDMA system according the first embodiment of the invention. FIG. 15A to FIG. 15E are its timing charts.

When the CPU 11a receives a Measurement Order (S1 in FIG. 6), it sets serial reception PLL data at timing Dv (FIG. 15C) corresponding to the frequency of the vacant channel for which the measurement should be made, in the set frequency data register 5a in the reception PLL 5, before the idle slot 2 (step S211).

The CPU 11a then makes judgment as to whether it is now in an idle slot (slot 2 in FIG. 15B) (step S212). If it is found at the step S212 that it is now in an idle slot, then the reception PLL strobe signal (FIG. 15D) of one bit is supplied from the parallel input/output 11h of the CPU 11a to the set frequency data register 5a, and the strobe operation is conducted at timing STv (step S213).

Then, timing Dc, the serial reception PLL data corresponding to the frequency of the current channel is set from the serial input/output 11g of the CPU 11a to the set frequency data register 5a in the reception PLL 5 (step S214).

Then, at step S215, judgment is made as to whether the reception PLL 5 has been phase-locked with the reception frequency for the vacant channel having been set at step S211 and having been strobed at step S213. This can be achieved, by measuring the lock-up time t1.

When it is judged that the phase-lock has been attained, then at step S216, the measurement of the channel quality of the vacant channel is effected at timing Mv in FIG. 15E.

After the measurement for the vacant channel is completed, the reception PLL strobe signal (FIG. 15D) of one bit is supplied to the parallel input/output 11h of the CPU 11a to the set frequency data register 5a, at timing STc. Then, judgment is made as to whether the reception PLL 5 has been phase-locked, by measuring the predetermined lock-up time.

When it is found that the phase-lock has been attained, the measurement of the channel quality for the current channel is effected at timing Mc in FIG. 15E.

The wireless telephone repeats the measurement of the channel qualities of the vacant channel and the current channel and transmits the results of the measurement until it receives a message from the base station commanding that the MAHO operation should be terminated.

As has been described, according to the above-described embodiment, the reception PLL data for the vacant channel for which the measurement should be made is set in the set frequency data register 5a prior to the idle slot, and reception PLL data for the current channel is set in the set frequency data register 5a during the idle slot and while the lock-up of the reception PLL for the vacant channel is executed. As a result, the time until the completion of the measurement for the vacant channel and current channel of the MAHO operation is essentially the sum of the time for the lock-up and measurement for the vacant channel and the time for lock-up and measurement for the current channel after the commencement of the idle slot. Thus, it is completed sooner than in the prior art by the time required for setting the reception PLL data for the vacant channel in the data register 5a.

Accordingly, even if the serial reception PLL data is transferred from the CPU 11a to the data register 5a at a low transfer speed, the measurement of the channel qualities of the vacant channel and the current channel can be completed within the stipulated measurement time (11 msec.), and the requirement of the MAHO timing can be met.

Moreover, since it is not necessary to increase the transfer speed of the reception PLL data, generation of the noises can be prevented, and degradation in the transmitted voice quality and the data communication quality can be avoided, and satisfactory reception can be continued.

The above-mentioned embodiment however has the following problem. That is, the timing for writing the reception PLL data for the vacant channel in the reception PLL 5 before the idle slot 2 may be within a transmission period for the wireless telephone in question, as indicated by dotted line Dv' in FIG. 15C, and electrically affect the operation of the transmitting circuit 6 (FIG. 1).

More specifically, the clock (FIG. 8A) for setting the data from the CPU 11a to the set frequency data register 5a in the reception PLL 5 has an amplitude of 5 V, and affects the operation of the transmitting circuit 6, and causes fluctuation of the transmission frequency. This appears as noises in the transmitted voice and data, and leads to degradation of the transmitted voice quality and interference in the data transmission. If the PLL data is set during the reception slot of the current channel, the receiving circuit is affected by the clock, and erroneous operation may be caused. The CPU 11a must carry out the control over the setting of the PLL data, concurrently with the control over the reception of the signal from the base station.

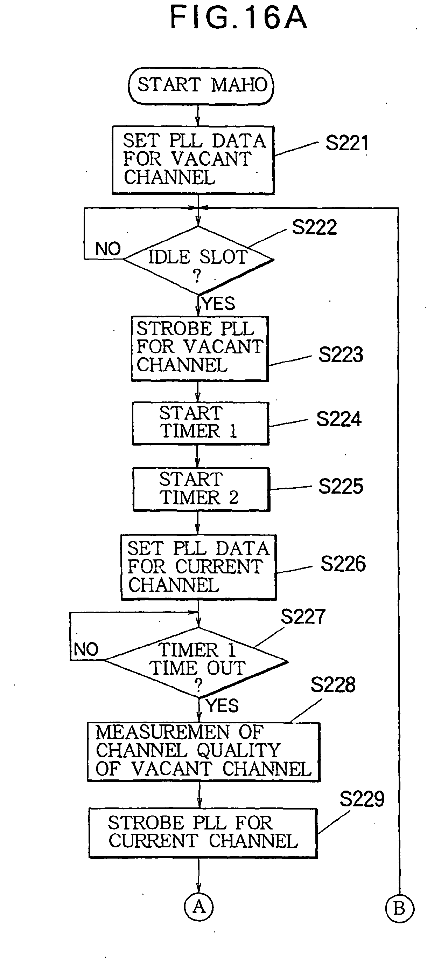

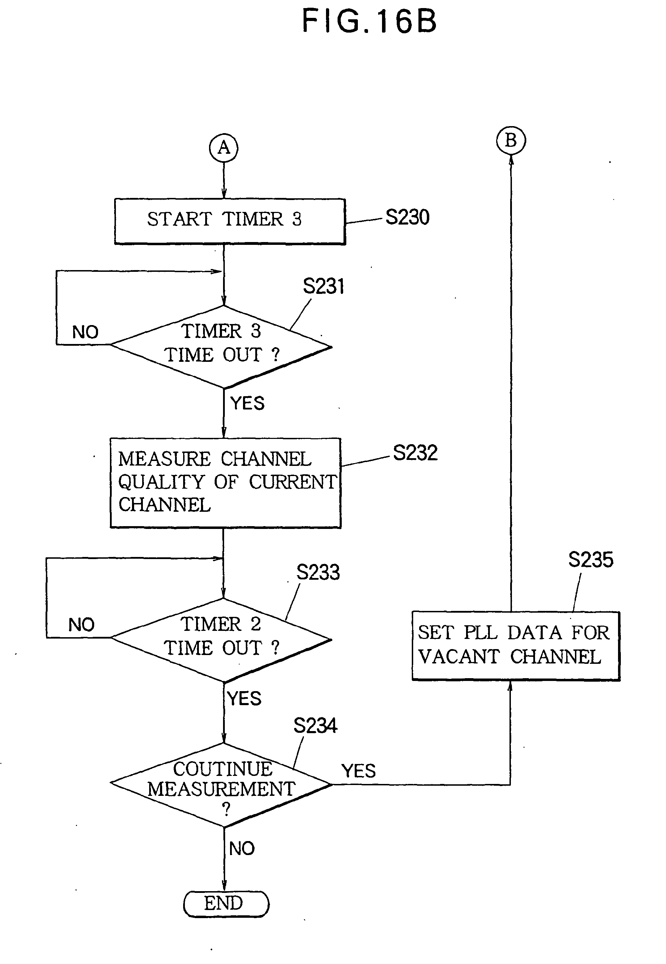

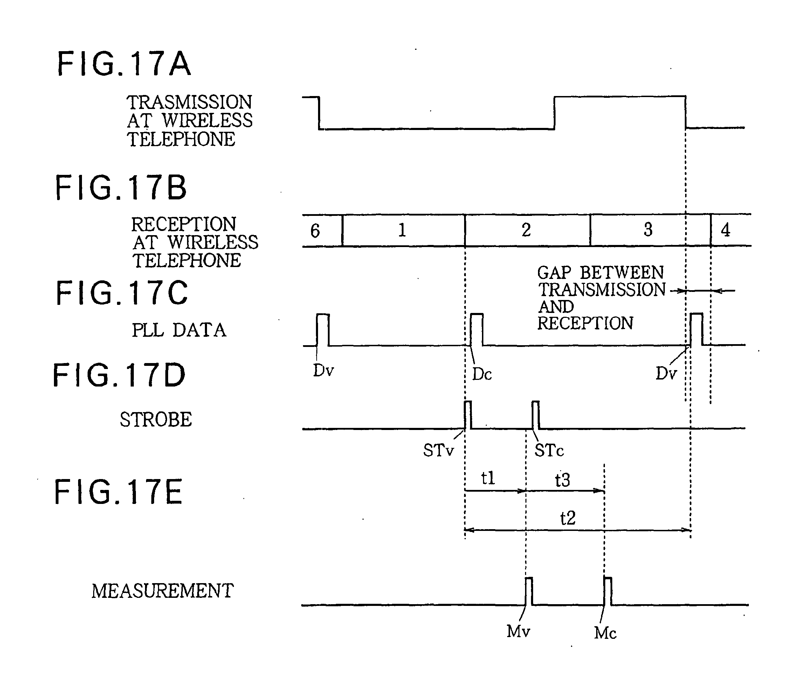

An embodiment described below with reference to FIG. 16A to FIG. 17E is to solve this problem. FIG. 16A and FIG. 16B are flowcharts of the MAHO operation of the CPU 11a of the wireless telephone of the TDMA system according to this embodiment. FIG. 17A to FIG. 17E are its timing charts.

When the CPU 11a receives a Measurement Order (S1 in FIG. 6) from the base station, then at step S221, the CPU 11a sets reception PLL data corresponding to the frequency of the vacant channel for which the measurement should be made, in the set frequency data register 5a in the reception PLL 5, during the slot for vacant channel (slot 6 in FIG. 17B) at timing Dv (step S221).

The CPU 11a then makes judgment whether it is now in an idle slot (slot 2 in FIG. 17B) (step S222). If it is found that it is now in an idle slot at step S222, then the reception PLL strobe signal (FIG. 17D) of one bit is supplied from the parallel input/output 11h of the CPU 11a to the set frequency data register 5a, and the strobe operation is effected at timing STv (step S223).

Simultaneously with the strobe processing, a first timer (implemented at the controller 11 by a software) for measuring the lock-up time t1 of the reception PLL 5 is started (step S224), and a second timer (implemented at the controller 11 by a software) for measuring the time t2 predetermined to expire during a period between the transmission period and the reception slot of the current channel is started (step S225).

Then, at step S226, the serial reception PLL data (FIG. 17C) corresponding to the frequency of the current channel is set from the serial input/output 11g of the CPU 11a to the set frequency data register 5a in the reception PLL 5 at timing Dc.

Then, at step S227, judgment is made as to whether the lock-up time t1 measured by the first timer has expired. If the expiration is detected, then at step S228, the measurement of the channel quality of the vacant channel is conducted at timing Mv in FIG. 17E.

When the measurement of the vacant channel is completed, the reception PLL strobe signal (FIG. 17D) of one bit is supplied from the parallel input/output 11h of the CPU 11a to the set frequency data register 5a, and the strobe processing is conducted at timing STc (step S229).

Simultaneously with the strobe processing, a third timer (implemented at the controller 11 by a software) for measuring the lock-up time t3 of the reception PLL 5 is started (step S230).

Then, at step S231, judgment is made as to whether the lock-up time t3 measured by the third timer has expired. When the expiration is detected, then at step S232, the measurement of the channel quality of the current channel is conducted at timing Mc in FIG. 17E.

Then, at step S233, judgment is made as to whether the predetermined time t2 measured by the second timer has expired. When the expiration is detected, then judgment is made as to whether a message for terminating the MAHO operation is received from the base station (step S234).

If it is found that the MAHO operation should be continued, then at the timing Dv of expiration of the predetermined time t2, i.e., at a timing Dv between the transmission period and the current channel reception slot (slot 4), the serial reception PLL data M7 (FIG. 17C) corresponding to the channel of the vacant channel for which the measurement should be made is set in the set frequency data register 5a in the reception PLL 5 (step S235). The process then returns to the step S222.

The wireless telephone repeats the measurement of the channel qualities of the vacant channel and the current channel, and transmission of the results of the measurement to the base station until it receives a message for terminating the MAHO operation.

As has been described, according to the embodiment of FIG. 16A to FIG. 17E, the predetermined time is measured using the second timer to conduct the setting of the PLL data for the vacant channel in the data register 5a during a period between the transmission period and the current channel reception slot.

As a result, the influence of the transfer clock on the transmitting circuit and the receiving circuit is eliminated, and generation of noises in the transmitted voice and data can be prevented. For this reason, in addition to the effects of the first embodiment described above, it is possible to conduct satisfactory transmission without degrading the transmitted voice quality and data communication quality. Moreover, erroneous operation due to the clock may be prevented.

In the above embodiment, the PLL data is set during a period other than the transmission period as well as the reception slot. However, the PLL data may be set at a time which is other than the transmission period but may be in the reception slot. Still alternatively, the PLL data may be set at a time which is other than the reception slot but may be in the transmission period.

In the embodiment of the programmable frequency divider 5b is used for dividing the output of the voltage controlled oscillator 5g, and the frequency division factor of the programmable frequency divider 5b is controlled in accordance with the PLL data from the CPU 11a. As an alternative, the frequency divider 5c may be replaced by a programmable frequency divider, and its frequency division factor may be controlled in accordance with the PLL data from the CPU 11a. In such a case, the programmable frequency divider 5b may be replaced by a frequency divider with a fixed frequency division factor.

## Claims

**1.** A wireless telephone for a TDMA system having a MAHO function, comprising:

reception means (6) for receiving a signal from a base station, said reception means (6) capable of reception in a selected one of a plurality of channels of different frequencies;
a controller (11) for causing the reception means (6) in a state of reception in a first channel to perform tentative reception and measurement in a second channel to find whether it is desirable to change a reception channel signal from the first channel to the second channel;
a PLL (5) for determining the frequency of the signal to be received by said reception means (6);
said controller (11) normally causing said PLL (5) to generate a first frequency corresponding to the first channel by providing said PLL (5) with first control data, causing, during a MAHO operation, said PLL (5) to generate a second frequency corresponding to the second channel by providing said PLL (5) with second control data, and applying a change timing signal for causing the PLL (5) to change from the first frequency to the second frequency; and

means (11) for measuring the channel quality of the said second channel;

wherein said signal transmitted from said base station is time-divided in a plurality of slots including a first slot which is currently allocated to the wireless telephone and a second slot in which the measurement of the channel quality of said second channel is to be effected, and *characterized by*:

said controller (11) for performing the operation of providing the first control data to said PLL (5), prior to the commencement of the second slot, and for performing the operation of applying a change of timing signal for causing the PLL (5) to change to the generated second frequency during said second slot.

2. The telephone according to claim 1, wherein said controller (11) is for transferring the second control data to said PLL (5) in said first slot.

3. The telephone according to claim 1, wherein said controller (11) is for transferring the second control data to said PLL(5) during a period other than a period for transmission from the wireless telephone to the base station.

4. The telephone according to claim 1 or 3, wherein said controller (11) is for transferring the second control data to said PLL (5) in a period other than the first slot.

**Patentansprüche**

1. Drahtloses Telefon für ein TDMA-System mit einer MAHO-Funktion, das umfasst:

Empfangsmittel (6) zum Empfangen eines Signals von einer Basisstation, wobei das Empfangsmittel (6) in einem ausgewählten Kanal einer Anzahl von Kanälen unterschiedlicher Frequenzen empfangsfähig ist;

eine Steuerung (11), um zu bewirken, dass das Empfangsmittel (6) in einem Zustand des Empfangs in einem ersten Kanal einen vorläufigen Empfang und eine Messung in einem zweiten Kanal durchführt, um herauszufinden, ob es wünschenswert ist, ein Empfangskanalsignal von dem ersten Kanal zu dem zweiten Kanal zu wechseln;

eine PLL (5) zum Bestimmen der Frequenz des Signals, das durch das Empfangsmittel (6) empfangen werden soll;

wobei die Steuerung (11), die normalerweise die PLL (5) zum Erzeugen einer ersten Frequenz, die dem ersten Kanal entspricht, durch Versorgen der PLL (5) mit ersten Steuerdaten veranlasst, die PLL (5) während eines MAHO-Vorgangs zum Erzeugen einer zweiten Frequenz, die dem zweiten Kanal entspricht, durch Versorgen der PLL (5) mit zweiten Steuerdaten veranlasst und ein Timing-Wechselsignal zuführt, um die PLL (5) zu einem Wechsel von der ersten Frequenz zu der zweiten Frequenz zu veranlassen; und

Mittel (11) zum Messen der Kanalqualität des zweiten Kanals;

wobei das Signal, das von der Basisstation übertragen wird, in eine Anzahl von Schlitzen zeitgeteilt ist, die einen ersten Schlitz, der gegenwärtig dem drahtlosen Telefon zugeordnet ist, und einen zweiten Schlitz, in welchem die Messung der Kanalqualität des zweiten Kanals erfolgen soll, einschließt, und **dadurch gekennzeichnet, dass**:

die Steuerung (11) zum Durchführen des Vorgangs des Zuführens der ersten Steuerdaten zu der PLL (5), vor dem Beginn des zweiten Schlitzes, und zum Durchführen des Vorgangs des Zuführens eines Timing-Wechselsignals zum Veranlassen der PLL (5), zu der erzeugten zweiten Frequenz während des zweiten Schlitzes zu wechseln, dient.

2. Telefon gemäß Anspruch 1, wobei die Steuerung (11) zum Übertragen der zweiten Steuerdaten zu der PLL (5) in dem ersten Schlitz dient.

3. Telefon gemäß Anspruch 1, wobei die Steuerung (11) zum Übertragen der zweiten Steuerdaten zu der PLL (5) während eines anderen Zeitraums als dem Zeitraum zur Übertragung von dem drahtlosen Telefon zu der Basisstation dient.

4. Telefon gemäß Anspruch 1 oder 3, wobei die Steuerung (11) zum Übertragen der zweiten Steuerdaten zu der PLL (5) in einem Zeitraum außer dem ersten Schlitz dient.

**Revendications**

1. Téléphone sans fil destiné à un système à accès TDMA présentant une fonction MAHO, comprenant :

un moyen de réception (6) destiné à recevoir un signal provenant d'une station de base, ledit moyen de réception (6) étant capable d'une réception dans un canal sélectionné parmi une pluralité de canaux à des fréquences différentes,
un contrôleur (11) destiné à amener le moyen de réception (6) dans un état de réception dans un premier canal à exécuter une réception et une mesure d'essai dans un second canal afin de trouver s'il est souhaitable de faire passer un signal de canal de réception du premier canal au second canal,
une boucle PLL (5) destinée à déterminer la fréquence du signal devant être reçu par ledit moyen de réception (6), ledit contrôleur (11) amenant normalement ladite boucle (PLL) à générer une première fréquence correspondant au premier canal en fournissant à ladite boucle PLL (5) des premières données de commande, en amenant, au cours d'une opération MAHO ladite boucle PLL (5) à générer une seconde fréquence correspondant au second canal en procurant à ladite boucle PLL (5) des secondes données de commande et en appliquant un signal d'instant de changement pour amener la boucle PLL (5) à changer de la première fréquence à la seconde fréquence,
un moyen (11) destiné à mesurer la qualité de canal dudit second canal,
où ledit signal transmis depuis ladite station de base est réparti dans le temps en une pluralité de tranches, comprenant une première tranche qui est actuellement allouée au téléphone sans fil et une seconde tranche dans laquelle la mesure de la qualité du canal dudit second canal doit être effectuée, et **caractérisé par** :
ledit contrôleur (11) destiné à exécuter l'opération consistant à procurer les premières données de commande à ladite boucle PLL (5), avant le commencement de la seconde tranche, et destiné à exécuter l'opération consistant à appliquer un changement de signal de synchronisation pour amener la boucle PLL (5) à modifier la seconde fréquence générée au cours de ladite seconde tranche.

2. Téléphone selon la revendication 1, dans lequel ledit contrôleur (11) est destiné à transférer les secondes données de commande à ladite boucle PLL (5) dans ladite première tranche.

3. Téléphone selon la revendication 1, dans lequel ledit contrôleur (11) est destiné à transférer les secondes données de commande à ladite boucle PLL (5) au cours d'une période autre qu'une période destinée à l'émission depuis le téléphone sans fil vers la station de base.

4. Téléphone selon la revendication 1 ou 3, dans lequel ledit contrôleur (11) est destiné à transférer les secondes données de commande à ladite boucle PLL (5) dans une période autre que la première tranche.

# FIG.1

PRIOR ART

EP 1 379 021 B1

# FIG.2

PRIOR ART

# FIG.3

PRIOR ART

TRANSMISSION AT BASE STATION & RECEPTION AT WIRELESS TELEPHONE

1 FRAME (972 symbols) = 40ms

1 slot

6 | 1 | 2 | 3 | 4 | 5 | 6 | 1

45 symbols

TRANSMISSION AT WIRELESS TELEPHONE

EP 1 379 021 B1

# FIG.4

## PRIOR ART

1 SLOT (162 symbols) = ABOUT 6.67ms

| 14 symbols | 142 symbols | 6 symbols |
|:---:|:---:|:---:|
| SYNC | DATA | SPARE |

# FIG.5

## PRIOR ART

1 SLOT (162 symbols) = ABOUT 6.67ms

| 3 symbols | 3 symbols | 8 symbols | 14 symbols | 134 symbols |
|:---:|:---:|:---:|:---:|:---:|
| GUARD | RAMP UP | DATA | SYNC | DATA |

# FIG.6
## PRIOR ART

BASE STATION

WIRELESS
TELEPHONE

MEASUREMENT ORDER   S1

MOBILE ACK        S2

CHANNEL QUALITY MESSAGE   S3

CHANNEL QUALITY MESSAGE   S4

# FIG.7A
## PRIOR ART

TO RECEPTION
CIRCUIT 6

# FIG.7B
## PRIOR ART

# FIG.8A
PRIOR ART

CLK

# FIG.8B
PRIOR ART

DATA

# FIG.8C
PRIOR ART

STROBE

EP 1 379 021 B1

# FIG.9
## PRIOR ART

```
        ┌─────────────────┐
        │   START MAHO    │
        └────────┬────────┘
                 │
                 ▼                    S1
        ◇─────────────────◇
  NO ◄──│    IDLE SLOT     │
        │        ?         │
        ◇─────────────────◇
                 │ YES
                 ▼
        ┌─────────────────┐
        │ SET RECEPTION   │── S2
        │ PLL DATA FOR    │
        │ VACANT CHANNEL  │
        └────────┬────────┘
                 │
                 ▼
        ┌─────────────────┐
        │ STROBE          │
        │ RECEPTION PLL   │── S3
        │ FOR VACANT      │
        │ CHANNEL         │
        └────────┬────────┘
                 │
                 ▼                    S4
        ◇─────────────────◇
  NO ◄──│  PHASE-LOCKED   │
        │        ?        │
        ◇─────────────────◇
                 │ YES
                 ▼
        ┌─────────────────┐
        │ MEASURE         │
        │ CHANNEL QUALITY │── S5
        │ OF VACANT       │
        │ CHANNEL         │
        └────────┬────────┘
                 │
                 ▼
        ┌─────────────────┐
        │  NEXT PROCESS   │
        └─────────────────┘
```

# FIG.10A
## PRIOR ART

TRASMISSION
AT WIRELESS
TELEPHONE

# FIG.10B
## PRIOR ART

→ IDLE SLOT

RECEPTION
AT WIRELESS
TELEPHONE

| 6 | 1 | 2 | 3 |

# FIG.10C
## PRIOR ART

PLL DATA

Dv    Dc

# FIG.10D
## PRIOR ART

STROBE

STv    STc

# FIG.10E
## PRIOR ART

Tm(<11ms)

Lv

MEASUREMENT

Mv    Mc

# FIG.11A

ANTENNA

- 1
- 2 DUPLEXER
- 3 TRANSMITTING CIRCUIT
- 4 TRANSMISSION PLL
- 5 RECEPTION PLL
- 6 RECEIVING CIRCUIT
- 7 MICROPHONE
- 8 TRANSMIT SIGNAL PROCESSOR
- 9 RECEIVE SIGNAL PROCESSOR
- 10 SPEAKER
- 11 CONTROLLER
- 11g OSCILLATOR
- 12 DISPLAY SECTION
- 13 INPUT SECTION

St

Sr

# FIG.11B

T1
T2
T3
T4

11d

EP 1 379 021 B1

# FIG.12

EP 1 379 021 B1

1 FRAME (972 symbols) = 40ms

SYNC   1 slot   SYNC

TRANSMISSION AT
BASE STATION &
RECEPTION AT
WIRELESS TELEPHONE

| 6 | | 1 | 2 | 3 | | 4 | 5 | 6 | | 1 |

45 symbols

Tr          Tp

Tt      Tp

TRANSMISSION AT
WIRELESS TELEPHONE

# FIG.13

```
                    ( START )
                        │
S101─┤ SET T1=Tf AND START │
                        │
                        ▼
S102      ◇ SYNC        ◇──NO──┐
          ◇ DETECTED? ◇         │         S103
                │                ▼
              YES            ◇   T1    ◇──NO──┐
                │            ◇ TIME OUT ◇      │
S104            │            ◇   ?     ◇       │
    ┌───────────┤                │             │
    │    ┌──────▼──────┐       YES            │
    │    │ SET  T2=Tr  │         ▼             │
    │    │     T3=Tt   │      ( END )          │
    │    │     T4=Ta   │                       │
    │    │ AND START   │                       │
    │    └──────┬──────┘                       │
    │           │                              │
    │   S105    ▼                              │
    │        ◇   T4    ◇──YES──────────────────┘
    │        ◇ TIME OUT ◇
    │        ◇   ?     ◇
    │   S106    │NO
    │           ▼
    │        ◇ ON-HOOK ◇──YES──┐
    │        ◇   ?     ◇        │
    │           │NO             ▼
    │   S107    ▼            ( END )
    │        ◇   T3    ◇──NO──┐
    │        ◇ TIME OUT ◇      │
    │        ◇   ?     ◇◄──────┘
    │           │YES
    │    ┌──────▼──────┐
    │    │ TRANSMIT AND │
    │    │ SET T3=Tp    │── S108
    │    │ AND START    │
    │    └──────┬──────┘
    │           ▼
    │   S109  ◇   T2    ◇──NO──┐
    │        ◇ TIME OUT ◇      │
    │        ◇   ?     ◇◄──────┘
    │           │YES
    │    ┌──────▼──────┐
    │    │ RECEIVE AND  │
    │    │ SET T2=Tp    │── S110
    │    │ AND START    │
    │    └──────┬──────┘
    │           ▼        S111
    │  ◇   SYNC    ◇
    └──NO─◇ DETECTED ? ◇
                │
              YES
```

23

# FIG.14

```
        START MAHO

   SET PLL DATA FOR ────── S211
   VACANT CHANNEL

          S212
   NO ◄── IDLE SLOT
              ?
          │ YES

   STROBE PLL FOR ────── S213
   VACANT CHANNEL

   SET PLL DATA FOR ────── S214
   CURRENT CHANNEL

          S215
   NO ◄── PHASE-LOCKED
              ?
          │ YES

   MEASURE CHANNEL ────── S216
   QUALITY OF VACANT
   CHANNEL

        NEXT PROCESS
```

# FIG.15A

TRASMISSION
AT WIRELESS
TELEPHONE

TRANSMISSION
PERIOD

# FIG.15B

RECEPTION
AT WIRELESS
TELEPHONE

IDLE SLOT

| 6 | 1 | 2 | 3 |

# FIG.15C

PLL DATA

D'v    Dv    Dc

# FIG.15D

STROBE

STv    STc

Tm (<11ms)

t1

# FIG.15E

MEASUREMENT

Mv    Mc

# FIG.16A

START MAHO

SET PLL DATA FOR VACANT CHANNEL — S221

IDLE SLOT ? — S222
— NO
YES

STROBE PLL FOR VACANT CHANNEL — S223

START TIMER 1 — S224

START TIMER 2 — S225

SET PLL DATA FOR CURRENT CHANNEL — S226

TIMER 1 TIME OUT ? — S227
NO
YES

MEASUREMEN OF CHANNEL QUALITY OF VACANT CHANNEL — S228

STROBE PLL FOR CURRENT CHANNEL — S229

A                    B

# FIG.16B

EP 1 379 021 B1

FIG.17A
TRASMISSION AT WIRELESS TELEPHONE

FIG.17B
RECEPTION AT WIRELESS TELEPHONE

FIG.17C
PLL DATA

FIG.17D
STROBE

FIG.17E
MEASUREMENT

GAP BETWEEN TRASMISSION AND RECEPTION

6  1  2  3  4

Dv  Dc  Dv

STv  STc

t1  t3  t2

Mv  Mc

28